(19) Europäisches Patentamt

European Patent Office

Office européen des brevets

(11) **EP 1 179 225 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(21) Anmeldenummer: **00931016.0**

(22) Anmeldetag: **06.04.2000**

(51) Int Cl.:
***H04B 1/10*** (2006.01)

(86) Internationale Anmeldenummer:
**PCT/DE2000/001063**

(87) Internationale Veröffentlichungsnummer:
**WO 2000/072454 (30.11.2000 Gazette 2000/48)**

(54) **VERFAHREN ZUM FILTERN EINES MOBILFUNKSIGNALS UND ENTSPRECHENDER MOBILFUNK-EMPFÄNGER**

METHOD FOR FILTERING A MOBILE RADIOTELEPHONE SIGNAL AND CORRESPONDING MOBILE RADIOTELEPHONE RECEIVER

PROCEDE DE FILTRAGE D'UN SIGNAL RADIO MOBILE ET RECEPTEUR RADIO MOBILE CORRESPONDANT

(84) Benannte Vertragsstaaten:
**DE FR GB**

(30) Priorität: **21.05.1999 DE 19923473**

(43) Veröffentlichungstag der Anmeldung:
**13.02.2002 Patentblatt 2002/07**

(73) Patentinhaber: **BenQ Corporation**
**Gueishan**
**Taoyuan 333 (TW)**

(72) Erfinder:
• **MEYER, Jan**
**D-82362 Weilheim (DE)**

• **VON BERGEN, Frank**
**D-81541 München (DE)**
• **HANTKE, Nico**
**D-80799 München (DE)**

(74) Vertreter: **Epping - Hermann - Fischer**
**Ridlerstrasse 55**
**80339 München (DE)**

(56) Entgegenhaltungen:
**EP-A- 0 542 520     EP-A- 0 722 226**
**EP-A- 0 887 944     US-A- 5 307 515**

**Beschreibung**

Die vorliegende Erfindung betrifft ein Verfahren zum Filtern eines empfangenen Mobilfunksignals nach dem Oberbegriff des Anspruches 1 sowie einen entsprechenden Mobilfunk-Empfänger nach dem Oberbegriff des Anspruches 20.

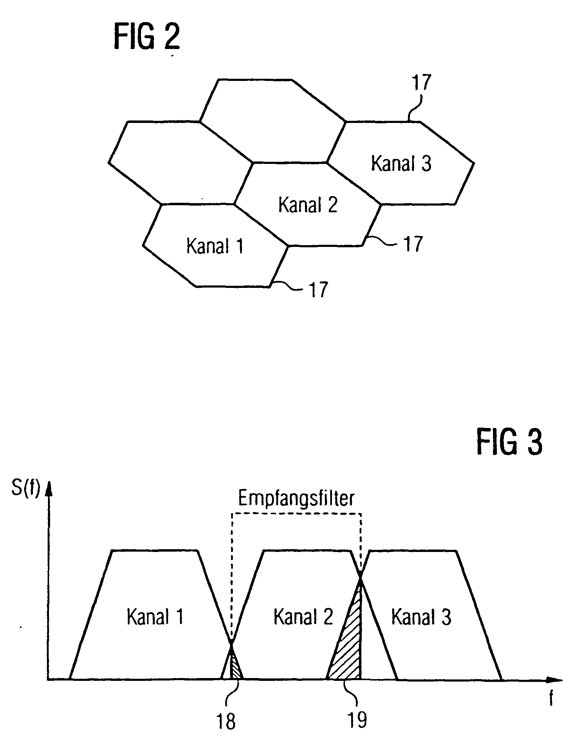

Mobilfunksysteme sind in der Regel zellular aufgebaut, um auch größere räumliche Gebiete bei einer begrenzten Frequenzbandbreite abdecken zu können. Wie in Fig. 2 gezeigt ist, umfassen derartige zellulare Mobilfunksysteme mehrere Funkzellen 17, wobei jeder Funkzelle ein eigener Mobilfunkkanal zugewiesen ist. In einer Funkzelle werden die Mobilfunkkanäle benachbarter Funkzellen nicht verwendet. Da jedoch die Funkfelddämpfung in einem derartigen Mobilfunksystem beschränkt ist, werden in jeder Funkzelle 17 insbesondere durch die Mobilfunkkanäle der unmittelbar benachbarten Funkzellen Störungen oder Interferenzen hervorgerufen. Dies betrifft v.a. jeweils den Grenzbereich zwischen zwei benachbarten Funkzellen 17. Derartige Störungen werden als Nachbarkanalstörungen bezeichnet. Der Nachbarkanalstörabstand, d.h. das Verhältnis zwischen der Signalleistung und der Störleistung benachbarter Kanäle, beeinflußt wesentlich die spektrale Effizienz eines Mobilfunksystems.

In Mobilfunk-Empfängern wird das empfangenen Mobilfunksignal üblicherweise einem Empfangsfilter zur Filterung zugeführt.

EP 0 542 520 offenbart ein anpassbares Filter, das Mittel zum Analysieren des empfangenen Signals umfasst, welches die Art des vorliegenden Interferenzsignals aus einer vorbestimmten Auswahl von Interferenzsignaltypen identifiziert und ein adaptives Filter, das auf ein Kontrollsignal reagiert, welches aus den Mitteln zum Analysieren des empfangenen Signals in Abhängigkeit vom Typ des Interferenzsignals produziert wird.

Wie in Fig. 3 gezeigt ist, hängt die Wirkung eines derartigen Empfangsfilters primär von der spektralen Lage und der Leistungsdichte S(f) der Nachbarkanalstörungen ab. So treten bei dem in Fig. 3 gezeigten Beispiel auch nach der Empfangsfilterung sowohl am unteren, schwarz markierten Endbereich 18 als auch am oberen, schraffiert markierten Endbereich 19 des Frequenzspektrums des Mobilfunkkanals Nr. 2 Nachbarkanalstörungen aufgrund der Mobilfunkkanäle Nr. 1 bzw. Nr. 3 der benachbarten Funkzellen auf. Während die noch im unteren Endbereich 18 verbliebenen Nachbarkanalstörungen vernachlässigbar sind, sind die im oberen Endbereich 19 verbliebenen Nachbarkanalstörungen noch relativ stark. Im Gegensatz zu Fig. 3 besitzen reale Empfangsfilter grundsätzlich keine unendliche Flankensteilheit, wodurch der Störeinfluß der Nachbarkanäle weiter erhöht wird.

Empfangsfilter können jedoch nicht derart dimensioniert werden, daß sie einerseits starke Nachbarkanalstörungen unterdrücken und damit die Bitfehlerrate verbessern, andererseits bei Nichtauftreten von Nach-barkanalstörungen die Bitfehlerrate aber nicht verschlechtern. Ein Empfangsfilter, welches für beide Fälle optimal ist, kann nicht dimensioniert werden.

Der vorliegenden Erfindung liegt daher die Aufgabe zugrunde, ein verfahren zum Filtern eines Mobilfunksignals und einen entsprechenden Mobilfunk-Empfänger bereitzustellen, womit die oben genannten Probleme beseitigt werden können und insbesondere ein zuverlässiges Ausfiltern von Nachbarkanalstörungen ohne Erhöhung der Bitfehlerrate bei Nichtauftreten von Nachbarkanalstörungen ermöglicht wird.

Diese Aufgabe wird gemäß der vorliegenden Erfindung durch ein verfahren mit den Merkmalen des Anspruches 1 bzw. einen Mobilfunk-Empfänger mit den Merkmalen des Anspruches 17 gelöst. Die Unteransprüche definieren jeweils bevorzugte und vorteilhafte Ausführungsformen der vorliegenden Erfindung.

Erfindungsgemäß wird das empfangene Mobilfunksignal zunächst hinsichtlich des Auftretens von Nachbarkanalstörungen analysiert, wobei eine Filterung des Mobilfunksignals nur statt-findet, falls die Analyse ergeben hat, daß tatsächlich auch Nachbarkanalstörungen vorhanden sind.

Zur Analyse des Mobilfunksignals, wobei das empfangene Mobilfunksignal in Bursts zusammengefasst Abtastwerte umfasst, wird dieses burstweise analysiert, wobei jeweils das Frequenzspektrum der einzelnen Bursts analysiert wird, und bei der Analyse eines Bursts des empfangenen Mobilfunksignals Nachbarkanalstörungen dadurch erfaßt werden, daß die am oberen Ende des Frequenzspektrums des Bursts enthaltene Energie und die am unteren Ende des Frequenzspektrums des Bursts enthaltene Energie bestimmt und miteinander verglichen werden, wobei bei einer definierten Abweichung zwischen diesen somit bestimmten Energien auf das Vorliegen von Nachbarkanalstörungen geschlossen wird, und bei Feststellen von Nachbarkanalstörungen die empfangenen Abtastwerte des analysierten Bursts einer Tiefpaßfilterung unterzogen und anschließend zur weiteren Verarbeitung ausgegeben werden.

Durch diese selektive bzw. adaptive Filterung des empfangenen Mobilfunksignals wird ein unnötiges Filtern eines nicht mit Nachbarkanalstörungen belasteten Mobilfunksignals vermieden.

In Mobilfunk-Empfängern, die beispielsweise gemäß dem GSM-Mobilfunkstandard betrieben werden, werden komplexe Abtastwerte burstweise für die nachfolgende Signalverarbeitung digitalisiert. Die vorliegende Erfindung schlägt daher vor, das Empfangssignal burstweise zu analysieren, ehe es dem im Mobilfunk-Empfänger enthaltenen Entzerrer zugeführt wird, wobei jeweils das Frequenzspektrum des analysierten Bursts ausgewertet wird. Wird bei dieser Analyse eine Störung durch mindestens einen Nachbarkanalstörer detektiert, wird eine entsprechende Filterung durchgeführt, während bei Nichtfeststellen einer Nachbarkanalstörung keine Filterung erfolgt.

Die Analyse und das selektive Filtern des Empfangssignals kann mit Hilfe eines entsprechenden Algorithmusses realisiert werden, dessen Komplexität so gering ist, daß er ohne weiteres mit einem in heutigen Mobiltelefonen ohnehin verwendeten digitalen Signalprozessor durchgeführt werden kann.

Das Entscheidungskriterium für die Detektion von Nachbarkanalstörungen kann derart parametriert werden, daß sich die Bitfehlerraten mit Nachbarkanalstörern gegenüber einer Signalverarbeitung ohne Anwendung der vorliegenden Erfindng deutlich verbessern und gleichzeitig keine Verschlechterung bei fehlenden Nachbarkanalstörern, z.B. bei sogenannten Gleichkanal- oder Rauschstörern, auftritt.

Die Erfindung wird nachfolgend näher anhand bevorzugter Ausführungsbeispiele unter Bezugnahme auf die beigefügte Zeichnung beschrieben.

Fig. 1 zeigt einen vereinfachten Aufbau eines Mobilfunksystems bestehend aus einem Sender und einem Empfänger, wobei bei dem Empfänger die vorliegende Erfindung angewendet ist,

Fig. 2 zeigt eine Darstellung zur Erläuterung des Aufbaus von zellularen Mobilfunknetzen, und

Fig. 3 zeigt eine Darstellung zur Erläuterung von Nachbarkanalstörungen.

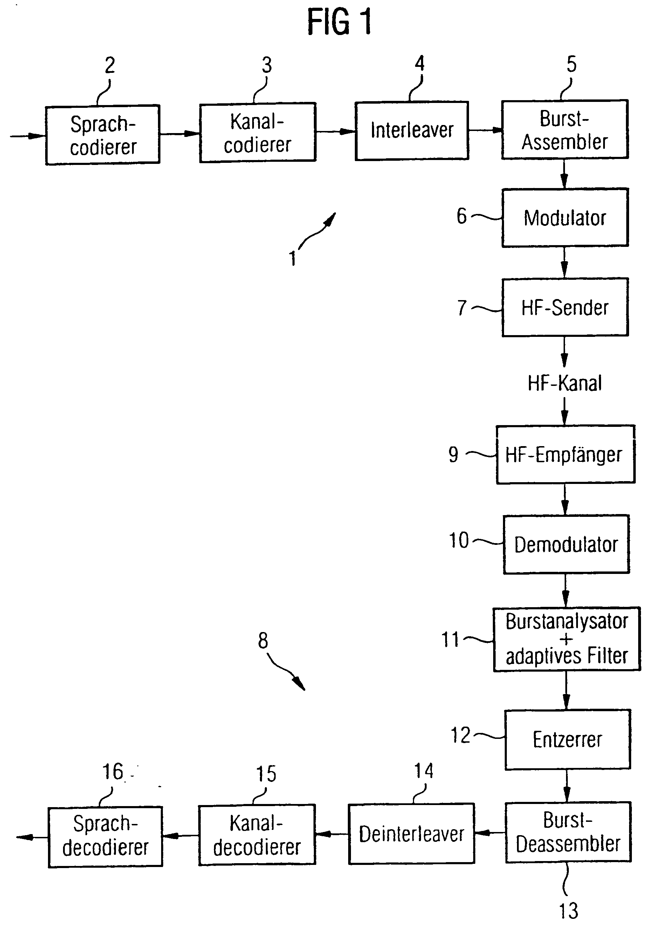

In Fig. 1 ist schematisch der Aufbau eines Mobilfunk-Senders 1 und eines Mobilfunk-Empfängers 8 dargestellt. Der Sender 1 umfaßt einen Sprachcodierer 2, der ein zu übertragendes analoges Sprachsignal in einen digitalen Bitstrom umsetzt und einem Kanalcodierer 3 zuführt. Der Kanalcodierer 3 fügt den eigentlichen Nutzbits in Abhängigkeit von einem bestimmten Kanalcodierverfahren zusätzliche redundate Bits oder Informationen hinzu, welche empfängerseitig zur Detektion von Ubertragungsfehlern ausgewertet werden können. Die Ausgangsdaten des Kanalcodierers 3 werden einem Interleaver 4 zugeführt, der diese zeitlich umordnet, um somit einen quasigedächnislosen Kanal zu schaffen. Dem Interleaver 4 ist ein Burstassembler 5 nachgeschaltet, der die zu übertragenden Daten in eine Rahmenstruktur einbettet und in Form von Bursts, d.h. physikalischen Kanälen, einem Modulator 6 zuführt. Der Modulator 6 moduliert die zu übertragenden Informationen auf ein Trägersignal auf, welches schließlich von einem Hochfrequenz-Sendeteil 7 über einen Hochfrequenz-Kanal an den Mobilfunk-Empfänger 8 übertragen wird.

Der Empfänger 8 besitzt entsprechend ein Hochfrequenz-Empfangsteil 9, einen Demodulator 10, einen Burst-Deassembler 13, einen Deinterleaver 14, einen Kanaldecodierer 15 und einen Sprachdecodierer 16, die jeweils die Funktionen der zuvor erläuterten Bestandteile des Senders 1 rückgängig machen. Darüber hinaus ist gemäß Fig. 1 zwischen dem Demodulator 10 und dem Burst-Deassembler 13 ein Entzerrer 12 vorgesehen, dem eine Einheit 11 zur spektralen Analyse des Empfangssignals und zur selektiven bzw. adaptiven Empfangsfilterung vorgeschaltet ist.

Auf die Funktion dieser Einheit 11 soll nachfolgend ausführlicher eingegangen werden.

Die Einheit 11 hat zur Aufgabe, die von dem Empfänger 8 empfangenen Bursts zu analysieren und abhängig von dem Analyseergebnis das Vorliegen von Nachbarkanalstörungen zu beurteilen. Bei Feststellen von Nachbarkanalstörungen in dem Frequenzspektrum des analysierten Bursts werden dessen Abtastwerte, welche von dem Demodulator 10 kommend in der Regel in komplexer digitaler Form vorliegen, gefiltert, um die Nachbarkanalstörungen zu beseitigen, während bei Nichtfeststellen von Nachbarkanalstörungen die Abtastwerte des Bursts unverändert dem nachgeschalteten Entzerrer 12 sowie den nachfolgenden Bauteilen zur weiteren Signalverarbeitung zugeführt werden. Die Funktion der Einheit 11 wird vorzugsweise von dem ohnehin in Mobiltelefonen vorgesehenen digitalen Signalprozessor gemäß einem entsprechenden Algorithmus ausgeführt.

Der von der Einheit 11 auszuführende Algorithmus kann verschiedenartig mit unterschiedlichem Rechenaufwand realisiert sein, wobei nachfolgend vier Ausführungsbeispiele der vorliegenden Erfindung erläutert werden sollen.

Gemäß einem ersten Ausführungsbeispiel wird vorgeschlagen, zur Detektion von Nachbarkanalstörungen zunächst die Energie in einem schmalen Frequenzband am unteren Ende (beispielsweise in dem in Fig. 3 gezeigten Bereich 18) sowie am oberen Ende (beispielsweise in dem in Fig. 3 gezeigten Bereich 19) des Frequenzspektrums des zu analysierenden Bursts zu bestimmen. Anschließend werden die somit bestimmten Energien am unteren und oberen Ende des Burstspektrums miteinander verglichen, wobei sich hierzu insbesondere eine Quotientenbildung empfiehlt, da dadurch eine von der mittleren Burstenergie unabhängige Entscheidung möglich ist. Ohne Nachbarkanalstörer ist der somit gebildete Quotient im Idealfall gleich 1, so daß Nachbarkanalstörer dadurch erkannt werden können, daß der Quotientenwert mit einem um den Wert 1 liegenden Toleranzbereich, d.h. mit einem unteren und einem oberen Grenzwert, verglichen wird. Liegt der Quotientenwert außerhalb dieses Toleranzbereichs, wird auf das Vorliegen von Nachbarkanalstörungen geschlossen.

Wurden auf diese Weise Nachbarkanalstörer detektiert, wird eine Filterung der ursprünglichen empfangenen Abtastwerte des entsprechenden Bursts durchgeführt, um die oder den Nachbarkanalstörer zu beseitigen. Diese Filterung wird vorzugsweise lediglich für diejenige Seite des Burstspektrums durchgeführt, welche die größere Störenergie aufweist. Zu diesem Zweck kann die Filterung in Form einer nichtrekursiven digitalen FIR-Tiefpaßfilterung (Finite Impulse Response) mit linearem Phasengang ausgestaltet sein, wobei der Frequenzgang des hierzu verwendeten FIR-Filters zur Filterung des Burstspektrum lediglich auf der gestörten Seite unsymmetrisch zur Ordinate, d.h. zur Mitte des Burstspektrums ist und aus diesem Grund komplexe Filterkoeffizienten aufweist. Es kann jedoch auch eine von einer FIR-Filterung abweichende Filterung, insbesondere z.B. eine IIR-Filterung mit einem einigermaßen linearen Phasengang, zum Einsatz kommen. Nach der Filterung werden die gefilterten Abtastwerte dem Entzerrer 12 zur weiteren Verarbeitung übergeben.

Wie zuvor beschrieben worden ist, ist gemäß diesem ersten Ausführungsbeispiel die Bestimmung der Energie am unteren und oberen Ende des Burstspektrums erforderlich. Zu diesem Zweck kann das Spektrum der komplexen Abtastwerte des Bursts um einen Wert $+\Delta f$ bzw. einem Wert $-\Delta f$ verschoben und das verschobene Burstspektrum jeweils anschließend tiefpaßgefiltert werden. Dabei wird vorzugsweise eine rekursive digitale IIR-Tiefpaßfilterung (Infinite Impulse Response) verwendet, da in diesem Fall der Realisierungsaufwand gegenüber einer FIR-Filterung geringer ist und zudem der nichtlineare Phasengang der IIR-Tiefpaßfilterung nicht bei der Detektion stört.

Die Verschiebung des Burstspektrums kann in Übereinstimmung mit dem Modulationssatz der Fouriertransformation jeweils durch Multiplikation der Abtastwerte des Bursts mit einer entsprechenden Verschiebesequenz erfolgen. Diese Verschiebesequenz besitzt je nach gewünschter Frequenzverschiebung unterschiedliche Längen. Dabei hat sich eine Frequenzverschiebung von $\Delta f = 101$ kHz als vorteilhaft erwiesen, da bereits bei dieser Verschiebung eine Detektion von Nachbarkanalstörungen möglich ist und die Verschiebesequenz nur aus acht (teilweise komplexen) Werten besteht. Selbstverständlich sind jedoch auch andere Frequenzverschiebungen möglich.

Anstelle der zweimaligen Verschiebung des Burstspektrums mit anschließender Tiefpaßfilterung kann auch ohne Verschiebung eine Filterung des Burstspektrums mit zwei Bandpaßfiltern durchgeführt werden, deren Durchlaßbereiche entsprechend im Bereich des unteren bzw. oberen Endes des Burstspektrums liegen.

Gemäß einem zweiten bevorzugten Ausführungsbeispiel der vorliegenden Erfindung ist eine Abwandlung des oben beschriebenen ersten Ausführungsbeispiels derart vorgesehen, daß ein symmetrisches FIR-Filter zur Unterdrückung von Nachbarkanalstörungen verwendet wird. In diesem Fall wird somit nach Feststellen von Nachbarkanalstörungen, unabhängig von der störbelasteten Seite des Burstspektrums, nicht nur der gestörte Teil des Burstspektrums, sondern auch der möglicherweise ungestörte Teil auf der anderen Seite des Burstspektrums gefiltert. Diese Vorgehensweise besitzt den Vorteil, daß aufgrund der Verwendung eines symmetrischen Filters dieses reelle Filterkoeffizienten besitzt und dadurch der Rechenaufwand ungefähr halbiert werden kann.

In Übereinstimmung mit einem dritten Ausführungsbeispiel der vorliegenden Erfindung wird zur Bestimmung und Filterung von Nachbarkanalstörungen eine alternative Vorgehensweise vorgeschlagen, welche sich von den beiden vorhergehenden Ausführungsbeispielen unterscheidet.

Gemäß diesem dritten Ausführungsbeispiel wird zunächst die Gesamtenergie $E_{orig}$ des Burstspektrums bestimmt. Anschließend wird grundsätzlich eine symmetrische FIR-Filterung durchgeführt, d.h. der Burst wird zunächst so behandelt, als ob Nachbarkanalstörungen vorliegen würden. Nachträglich wird beurteilt, ob diese Filtermaßnahme tatsächlich berechtigt war oder nicht, wozu die Energie $E_{filt}$ des gefilterten Burstspektrums bzw. der entsprechenden Abtastwerte bestimmt und mit der Energie $E_{orig}$ des ungefilterten ursprünglichen Burstspektrums verglichen wird, wobei hierzu insbesondere die Berechnung des folgenden Ausdrucks sinnvoll ist:

$$\frac{E_{orig} - E_{filt}}{E_{orig}}$$

Der somit bestimmte Ausdruck wird mit einem parametrierbaren Grenzwert verglichen, wobei auf das Vorliegen von Nachbarkanalstörungen geschlossen werden kann, falls dieser Ausdruck größer als der Grenzwert ist, d.h. falls $E_{orig}$ deutlich größer als $E_{filt}$ ist.

Wurden auf diese Weise Nachbarkanalstörungen festgestellt, war die bereits durchgeführte Filterung berechtigt, und die gefilterten Abtastwerte werden dem in Fig. 1 gezeigten Entzerrer 12 zur weiteren Verarbeitung zugeführt. Wurden hingegen infolge der Berechnung des obigen Ausdrucks keine Nachbarkanalstörungen erfaßt, war die durchgeführte Filterung nicht berechtigt, und es werden dem Entzerrer 12 die ursprünglichen ungefilterten Abtastwerte zur weiteren Verarbeitung zugeführt.

Das oben beschriebene dritte Ausführungsbeispiel besitzt den Vorteil, daß die bei den ersten beiden Ausführungsbeispielen erforderlichen Frequenzverschieberoutinen und IIR-Filterungen wegfallen und somit der zur Störsignalunterdrückung erforderliche Aufwand weiter reduziert werden kann.

Gemäß einem vierten Ausführungsbeispiel der vorliegenden Erfindung kann das dritte Ausführungsbeispiel dahingehend abgewandelt werden, daß die Verfahrensschritte nicht mehr auf einen ganzen Burst angewendet werden, sondern für jede Bursthälfte getrennt zum Einsatz kommen, d.h. es werden u.a. die oben beschriebenen Berechnungen für die beiden Hälften des zu analysierenden Bursts getrennt durchgeführt. Dies hat den Vorteil, daß Störsignale mit einem sehr unterschiedlichen zeitlichen Fadingverlauf im Vergleich zum Nutzsignal besser detektiert werden können. So kann beispielsweise ein Störsignal, welches lediglich während einer halben Burstdauer auftritt, besser detektiert und beseitigt werden. Darüber hinaus kann bei dieser Vorgehensweise gegebenenfalls eine unnötige Filterung der zweiten Bursthälfte vermieden werden.

**Patentansprüche**

1. Verfahren zum Filtern eines Mobilfunksignals,

   - wobei ein über einen Mobilfunkkanal empfangenes Mobilfunksignal vor seiner weiteren Verarbeitung gefiltert wird
   - und das empfangene Mobilfunksignal hinsichtlich des Auftretens von Nachbarkanälstörungen analysiert wird,
   - und bei Feststellen von Nachbarkanalstörungen in dem empfangenen Mobilfunksignal dieses selektiv vor seiner weiteren Verarbeitung zur Unterdrückung der Nachbarkanalstörungen gefiltert wird, wobei das empfangene Mobilfunksignal in Bursts zusammengefaßte Abtastwerte umfaßt und
   - zur Analyse des Mobilfunksignals dieses burstweise analysiert wird, wobei jeweils das Frequenzspektrum der einzelnen Bursts analysiert wird und
   - bei der Analyse eines Bursts des empfangenen Mobilfunksignals Nachbarkanalstörungen **dadurch** erfaßt werden, daß die am oberen Ende (19) des Frequenzspektrums des Bursts enthaltene Energie und die am unteren Ende (18) des Frequenzspektrums des Bursts enthaltene Energie bestimmt und miteinander verglichen werden,
   - wobei bei einer definierten Abweichung zwischen diesen somit bestimmten Energien auf das Vorliegen von Nachbarkanalstörungen geschlossen wird
   - und bei Feststellen von Nachbarkanalstörungen die empfangenen Abtastwerte des analysierten Bursts einer Tiefpaßfilterung unterzogen und anschließend zur weiteren Verarbeitung ausgegeben werden.

2. Verfahren nach Anspruch 1,
   **dadurch gekennzeichnet,**
   **daß** der Quotient zwischen den somit bestimmten Energien am oberen bzw. unteren Ende des Frequenzspektrums des Bursts gebildet wird, und
   **daß** auf das Vorliegen von Nachbarkanalstörungen geschlossen wird, falls der Quotientenwert außerhalb eines bestimmten Toleranzbereichs um den Wert 1 liegt.

3. Verfahren nach Anspruch 1 oder 2,
   **dadurch gekennzeichnet,**
   **daß** durch die FIR-Tiefpaßfilterung Frequenzanteile an demjenigen Ende des Frequenzspektrums des Bursts ausgefiltert werden, für welches die größere Energie festgestellt worden ist.

4. Verfahren nach einem der Ansprüche 1 bis 3,
   **dadurch gekennzeichnet,**

   **daß** bei Feststellen von Nachbarkanalstörungen die empfangenen Abtastwerte des analysierten Bursts einer symmetrischen FIR-Tiefpaßfilterung unterzogen und anschließend zur weiteren Verarbeitung ausgegeben werden.

5. Verfahren nach einem der vorhergehenden Ansprüche,
   **dadurch gekennzeichnet,**
   **daß** zur Bestimmung der am oberen Ende (19) bzw. der am unteren Ende (18) des Frequenzspektrums des Bursts enthaltene Energie das Frequenzspektrum des Bursts um einen Betrag -$\Delta$f bzw. +$\Delta$f verschoben und tiefpaßgefiltert wird.

6. Verfahren nach Anspruch 5,
   **dadurch gekennzeichnet,**
   **daß** $\Delta$f = 101kHz gilt.

7. Verfahren nach Anspruch 5 oder 6,
   **dadurch gekennzeichnet,**
   **daß** das Frequenzspektrum des Bursts durch Multiplikation der empfangenen Abtastwerte des Bursts mit einer Verschiebesequenz verschoben wird.

8. Verfahren nach Anspruch 6 und 7,
   **dadurch gekennzeichnet,**
   **daß** die Verschiebesequenz acht Werte umfaßt.

9. Verfahren nach einem der Ansprüche 5 bis 8,
   **dadurch gekennzeichnet,**
   **daß** das um -$\Delta$f bzw. +$\Delta$f verschobene Frequenzspektrum des analysierten Bursts zur Bestimmung der am oberen Ende (19) des Frequenzspektrums des Bursts bzw. der am unteren Ende (18) des Frequenzspektrums des Bursts enthaltene Energie einer IIR-Tiefpaßfilterung unterzogen wird.

10. Verfahren nach einem der Ansprüche 1 bis 4,
    **dadurch gekennzeichnet,**
    **daß** zur Bestimmung der am oberen Ende (19) bzw. der am unteren Ende (18) des Frequenzspektrums des Bursts enthaltene Energie das Frequenzspektrum des Bursts einer ersten Bandpaßfilterung mit einem am oberen Ende (19) des Frequenzspektrums des Bursts liegenden Durchlaßbereich und einer zweiten Bandpaßfilterung mit einem am unteren Ende (18) des Frequenzspektrums des Bursts liegenden Durchlaßbereich unterzogen wird.

11. Verfahren nach Anspruch 1,
    **dadurch gekennzeichnet,**
    **daß** bei der Analyse eines Bursts des empfangenen Mobilfunksignals Nachbarkanalstörungen **dadurch** erfaßt werden, daß die Energie des Frequenzspektrums des analysierten Bursts bestimmt wird, die empfangenen Abtastwerte des Bursts zur Beseitigung möglicher Nachbarkanalstörungen gefiltert werden und die Energie des Frequenzspektrums des gefilterten Bursts bestimmt und mit der Energie des Frequenzspektrums des ungefilterten Bursts verglichen wird, wobei auf das Vorliegen von Nachbarkanalstörungen geschlossen wird, falls die Energie des Frequenzspektrums des ungefilterten Bursts stärker als einen vorgegebenen Toleranzwert von der Energie des Frequenzspektrums des gefilterten Bursts abweicht.

**12.** Verfahren nach Anspruch 11,
**dadurch gekennzeichnet,**
**daß** bei der Filterung des zu analysierenden Bursts eine FIR-Filterung durchgeführt wird.

**13.** Verfahren nach Anspruch 11 oder 12,
**dadurch gekennzeichnet,**
**daß** bei Erkennen des Vorliegens von Nachbarkanalstörungen die gefilterten Abtastwerte zur weiteren Verarbeitung ausgegeben werden, während bei Erkennen des Nichtvorliegens von Nachbarkanalstörungen die ungefilterten Abtastwerte zur weiteren Verarbeitung ausgegeben werden.

**14.** Verfahren nach einem der Ansprüche 11 bis 13,
**dadurch gekennzeichnet,**
**daß** zum Vergleichen der Energie des Frequenzspektrums des ungefilterten Bursts mit derjenigen des Frequenzspektrums des gefilterten Bursts der Quotient $(E_{orig}-E_{filt})/E_{filt}$ berechnet und mit dem vorgegebenen Toleranzwert verglichen wird, wobei $E_{orig}$ der Energie des Frequenzspektrums des ungefilterten Bursts und $E_{filt}$ der Energie des Frequenzspektrums des gefilterten Bursts entspricht.

**15.** Verfahren nach einem der Ansprüche 11 bis 14,
**dadurch gekennzeichnet,**
**daß** die Energien jeweils für den gesamten ungefilterten bzw. gefilterten Burst bestimmt werden, wobei bei der Filterung des Bursts dieser einer symmetrischen Filterung unterzogen wird.

**16.** Verfahren nach einem der Ansprüche 11 bis 14,
**dadurch gekennzeichnet,**
**daß** die einzelnen Verfahrensschritte für jede Bursthälfte des analysierten Bursts getrennt durchgeführt werden.

**17.** Mobilfunk-Empfänger,
mit einem Empfangsteil (9) zum Empfangen eines über einen Mobilfunkkanal übertragenen Mobilfunksignals,
mit einem Demodulator (10) zum Demodulieren des empfangenen Mobilfunksignals, und
mit einem Entzerrer (12) zum Entzerren des demodulierten Mobilfunksignals vor dessen weiterer Verarbeitung in dem Mobilfunk-Empfänger und
mit Analysiermitteln (11) zum Analysieren des demodulierten Mobilfunksignals hinsichtlich des Auftretens von Nachbarkanalstörungen, die derart eingerichtet sind, dass,

- zur Analyse des Mobilfunksignals dieses burstweise analysiert wird, wobei jeweils das Frequenzspektrum der einzelnen Bursts analysiert wird und
- bei der Analyse eines Bursts des empfangenen Mobilfunksignals Nachbarkanalstörungen **dadurch** erfaßt werden, daß die am oberen Ende (19) des Frequenzspektrums des Bursts enthaltene Energie und die am unteren Ende (18) des Frequenzspektrums des Bursts enthaltene Energie bestimmt und miteinander verglichen werden,
- wobei bei einer definierten Abweichung zwischen diesen somit bestimmten Energien auf das Vorliegen von Nachbarkanalstörungen geschlossen wird,
- und bei Feststellen von Nachbarkanalstörungen die empfangenen Abtastwerte des analysierten Bursts Filtermittel (11) zum Durchführen einer Tiefpasssfilterung angesteuert werden und das demodulierten Mobilfunksignal dem Entzerrer (12) zugeführt wird.

**18.** Mobilfunk-Empfänger nach Anspruch 17,
**dadurch gekennzeichnet,**
**daß** die Analysiermittel bzw. Filtermittel (11) zur Durchführung des Verfahrens nach einem der Ansprüche 1-17 ausgestaltet sind.

## Claims

**1.** Method for filtering a mobile radiotelephone signal,

- in which a mobile radiotelephone signal received via a mobile radiotelephone channel is filtered before its further processing,
- and the received mobile radiotelephone signal is analysed for the presence of adjacent channel interference,
- and, if adjacent channel interference is determined in the received mobile radiotelephone signal, the latter is selectively filtered before its further processing in order to suppress the adjacent channel interference, in which the received mobile radiotelephone signal comprising sampling values combined into bursts, and
- in order to analyse the mobile radiotelephone signal, the latter is analysed in bursts, the frequency spectrum of the individual bursts in each case being analysed, and
- in analysing a burst of the received mobile radiotelephone signal, adjacent channel interference is detected in that the energy contained at the upper end (19) of the frequency spectrum of the burst and the energy contained at the lower end (18) of the frequency spectrum of the burst are defined and compared with one another,
- whereby, in the event of a defined difference between these energies defined in this way, the presence of adjacent channel interference is inferred,
- and if adjacent channel interference is detected, the received sampling values of the analysed burst are subjected to low-pass filtering and are then output for further processing.

2. Method according to Claim 1,
   **characterized in that**,
   the quotient between the energies defined in this way at the upper or lower end of the frequency spectrum of the burst is formed, and
   the presence of adjacent channel interference is inferred if the quotient value lies outside a specific tolerance range around the value 1.

3. Method according to Claim 1 or 2,
   **characterized in that**,
   frequency components at the end of the frequency spectrum of the burst for which the higher energy was detected are filtered out by the FIR low-pass filtering.

4. Method according to one of Claims 1 to 3,
   **characterized in that**,
   if adjacent channel interference is detected, the received sampling values of the analysed burst are subjected to symmetrical FIR low-pass filtering and are then output for further processing.

5. Method according to one of the preceding claims,
   **characterized in that**,
   in order to define the energy contained at the upper end (19) or at the lower end (18) of the frequency spectrum of the burst, the frequency spectrum of the burst is shifted by an amount $-\Delta f$ or $+\Delta f$ and is low-pass filtered.

6. Method according to Claim 5,
   **characterized in that**,

$$\Delta f = 101 \text{ kHz.}$$

7. Method according to Claim 5 or 6,
   **characterized in that**,
   the frequency spectrum of the burst is shifted by multiplying the received sampling values of the burst by a shift sequence.

8. Method according to Claims 6 and 7,
   **characterized in that**,
   the shift sequence comprises eight values.

9. Method according to one of Claims 5 to 8,
   **characterized in that**,
   the frequency spectrum of the analysed burst shifted by $-\Delta f$ or $+\Delta f$ is subjected to IIR low-pass filtering in order to define the energy contained at the upper end (19) of the frequency spectrum of the burst or at the lower end (18) of the frequency spectrum of the burst.

10. Method according to one of Claims 1 to 4,
    **characterized in that**,
    in order to define the energy contained at the upper end (19) or the lower end (18) of the frequency spectrum of the burst, the frequency spectrum of the burst is subjected to a first bandpass filtering with a passband range lying at the upper end (19) of the frequency spectrum and a second bandpass" filtering with a passband range lying at the lower end (18) of the frequency spectrum.

11. Method according to Claim 1,
    **characterized in that**,
    in analysing a burst of the received mobile radiotelephone signal, adjacent channel interference is detected **in that** the energy of the frequency spectrum of the analysed burst is defined, the received sampling values of the burst are filtered to eliminate possible adjacent channel interference and the energy of the frequency spectrum of the filtered burst is defined and compared with the energy of the frequency spectrum of the unfiltered burst,
    whereby the presence of adjacent channel interference is inferred if the energy of the frequency spectrum of the unfiltered burst differs by more than a predefined tolerance value from the energy of the frequency spectrum of the filtered burst.

12. Method according to Claim 11,
    **characterized in that**,
    FIR filtering is carried out in the filtering of the burst which is to be analysed.

13. Method according to Claim 11 or 12,
    **characterized in that**,
    if the presence of adjacent channel interference is detected, the filtered sampling values are output for further processing, whereas, if the absence of adjacent channel interference is detected, the unfiltered sampling values are output for further processing.

14. Method according to one of Claims 11 to 13,
    **characterized in that**,
    in order to compare the energy of the frequency spectrum of the unfiltered burst with the energy of the frequency spectrum of the filtered burst, the quotient $(E_{orig}-E_{filt})/E_{filt}$ is calculated and compared with the predefined tolerance value, where $E_{orig}$ corresponds to the energy of the frequency spectrum of the unfiltered burst and $E_{filt}$ corresponds to the energy of the filtered burst.

15. Method according to one of Claims 11 to 14, **characterized in that**, the energies are in each case defined for the entire unfiltered or filtered burst, whereby, in filtering the burst, the latter is subjected to symmetrical filtering.

16. Method according to one of Claims 11 to 14, **characterized in that**, the individual method steps are carried out separately for each burst half of the analysed burst.

17. Mobile radiotelephone receiver, with a receive component (9) to receive a mobile radiotelephone signal transmitted via a mobile radiotelephone channel, with a demodulator (10) to demodulate the received mobile radiotelephone signal, and with an equalizer (12) to equalize the demodulated mobile radiotelephone signal before its further processing in the mobile radiotelephone receiver, having analysing means (11) for analysing the demodulated mobile radiotelephone signal for the presence of adjacent channel interference,

- in order to analyse the mobile radiotelephone signal, the latter is analysed in bursts, the frequency spectrum of the individual bursts in each case being analysed, and
- in analysing a burst of the received mobile radiotelephone signal, adjacent channel interference is detected in that the energy contained at the upper end (19) of the frequency spectrum of the burst and the energy contained at the lower end (18) of the frequency spectrum of the burst are defined and compared with one another,
- whereby, in the event of a defined difference between these energies defined in this way, the presence of adjacent channel interference is inferred,
- and if adjacent channel interference is detected, the received sampling values of the analysed burst are subjected to low-pass filtering and are then output for further processing,
- and if adjacent channel interference is detected, the received sampling values of the analysed burst filter means (11) for carrying out low-pass filtering are controlled and the demodulated mobile radiotelephone signal is conveyed to the equalizer (12)

18. Mobile radio receiver according to Claim 17,

**characterized in that**
the analysing means and filtering means (11) are designed to carry out the method according to one of Claims 1-17.

## Revendications

1. Procédé de filtrage d'un signal radio mobile,

- dans lequel on filtre un signal radio mobile reçu sur un canal radio mobile avant son traitement ultérieur
- et on analyse le signal radio mobile reçu quant à l'apparition de perturbations par le canal voisin,
- et en cas de constatation de perturbations par le canal voisin dans le signal radio mobile reçu, on filtre celui-ci de manière sélective avant son traitement ultérieur pour supprimer les perturbations par le canal voisin, le signal radio mobile reçu comprenant des valeurs d'échantillonnage assemblées en bursts et
- en vue de l'analyse du signal radio mobile, celui-ci étant analysé par burst en analysant à chaque fois le spectre de fréquences des différents bursts, et
- lors de l'analyse d'un burst du signal radio mobile reçu, on détecte des perturbations par le canal voisin en déterminant l'énergie contenue à l'extrémité supérieure (19) du spectre de fréquences du burst et l'énergie contenue à l'extrémité inférieure (18) du spectre de fréquences du burst et en les comparant l'une avec l'autre,
- et en cas d'écart défini entre ces énergies ainsi déterminées, on conclut à la présence de perturbations par le canal voisin
- et en cas de constatation de perturbations par le canal voisin, on soumet les valeurs d'échantillonnage reçues du burst analysé à un filtrage passe-bas puis on les délivre en vue du traitement ultérieur.

2. Procédé selon la revendication 1, **caractérisé en ce que** on forme le quotient des énergies ainsi déterminées à l'extrémité supérieure resp. inférieure du spectre de fréquences du burst, et on conclut à la présence de perturbations par le canal voisin si la valeur du quotient en dehors d'une certaine plage de tolérance se situe autour de la valeur 1.

3. Procédé selon la revendication 1 ou 2, **caractérisé en ce que** suite au filtrage passe-bas FIR, des fractions de fréquences sont éliminées à l'extrémité du spectre de fréquences, pour laquelle a été déterminée la plus grande énergie.

**4.** Procédé selon l'une des revendications 1 à 3, **caractérisé en ce que** en cas de constatation de perturbations par le canal voisin, on soumet les valeurs d'échantillonnage reçues du burst analysé à un filtrage passe-bas FIR symétrique puis on les délivre en vue du traitement ultérieur.

**5.** Procédé selon l'une des revendications précédentes, **caractérisé en ce que** en vue de déterminer l'énergie contenue à l'extrémité supérieure (19) resp. à l'extrémité inférieure (18) du spectre de fréquences du burst, on décale le spectre de fréquences du burst d'une valeur -Δf resp. +Δf et on le soumet à un filtrage passe-bas.

**6.** Procédé selon la revendication 5, **caractérisé en ce que** Δf = 101 kHz s'applique.

**7.** Procédé selon la revendication 5 ou 6, **caractérisé en ce que** on décale le spectre de fréquences du burst en multipliant les valeurs d'échantillonnage reçues du burst par une séquence de décalage.

**8.** Procédé selon les revendications 6 et 7, **caractérisé en ce que** la séquence de décalage comprend huit valeurs.

**9.** Procédé selon l'une des revendications 5 à 8, **caractérisé en ce que** on soumet le spectre de fréquences décalé de -Δf resp. +Δf du burst analysé à un filtrage passe-bas IIR pour déterminer l'énergie contenue à l'extrémité supérieure (19) du spectre de fréquences du burst resp. à l'extrémité inférieure (18) du spectre de fréquences du burst.

**10.** Procédé selon l'une des revendications 1 à 4, **caractérisé en ce que** pour déterminer l'énergie contenue à l'extrémité supérieure (19) resp. à l'extrémité inférieure (18) du spectre de fréquences du burst, on soumet le spectre de fréquences du burst à un premier filtrage basse-bande avec une bande passante située à l'extrémité supérieure (19) du spectre de fréquences du burst, et à un deuxième filtrage passe-bande avec une bande passante située à l'extrémité inférieure (18) du spectre de fréquences du burst.

**11.** Procédé selon la revendication 1, **caractérisé en ce que** lors de l'analyse d'un burst du signal radio mobile reçu, on détecte des perturbations par le canal voisin en déterminant l'énergie du spectre de fréquences du burst analysé, en filtrant les valeurs d'échantillonnage reçues du burst pour supprimer des perturbations possibles par le canal voisin et en déterminant l'énergie du spectre de fréquences du burst filtré et en la comparant avec l'énergie du spectre de fréquences du burst non filtré, et on conclut à la présence de perturbations par le canal voisin si l'énergie du spectre de fréquences du burst non filtré s'écarte de manière plus importante qu'une valeur de tolérance prédéfinie de l'énergie du spectre de fréquences du burst filtré.

**12.** Procédé selon la revendication 11, **caractérisé en ce que** un filtrage FIR est effectué lors du filtrage du burst à analyser.

**13.** Procédé selon la revendication 11 ou 12, **caractérisé en ce que** en cas de reconnaissance de la présence de perturbations par le canal voisin, on délivre les valeurs d'échantillonnage filtrées en vue du traitement ultérieur, tandis qu'en cas de reconnaissance de l'absence de perturbations par le canal voisin, on délivre les valeurs d'échantillonnage non filtrées en vue du traitement ultérieur.

**14.** Procédé selon l'une des revendications 11 à 13, **caractérisé en ce que** pour comparer l'énergie du spectre de fréquences du burst non filtré avec celle du spectre de fréquences du burst filtré, on calcule le quotient $(E_{orig}-E_{filt})/E_{filt}$ et on le compare avec la valeur de tolérance prédéfini, $E_{orig}$ correspondant à l'énergie du spectre de fréquences du burst non filtré et $E_{filt}$ à l'énergie du spectre de fréquences du burst filtré.

**15.** Procédé selon l'une des revendications 11 à 14, **caractérisé en ce que** on détermine les énergies à chaque fois pour le burst entier non filtré resp. filtré, lors du filtrage du burst celui-ci étant soumis à un filtrage symétrique.

**16.** Procédé selon l'une des revendications 11 à 14, **caractérisé en ce que** les différentes étapes du procédé sont effectuées séparément pour chaque demi-burst du burst analysé.

**17.** Récepteur radio mobile, avec une partie réceptrice (9) pour recevoir un signal radio mobile transmis sur un canal radio mobile, avec un démodulateur (10) pour démoduler le signal radio mobile reçu, et avec un égaliseur (12) pour égaliser le signal radio mobile démodulé avant son traitement ultérieur dans le récepteur radio mobile et

avec des moyens d'analyse (11) pour analyser le signal radio mobile démodulé quant à l'apparition de perturbations par le canal voisin, lesquels moyens sont configurés de telle manière que

- en vue de l'analyse du signal radio mobile, celui-ci est analysé par burst en analysant à chaque fois le spectre de fréquences des différents bursts,

- et lors de l'analyse d'un burst du signal radio mobile reçu, des perturbations par le canal voisin sont détectées grâce au fait que l'énergie contenue à l'extrémité supérieure (19) du spectre de fréquences du burst et l'énergie contenue à l'extrémité inférieure (18) du spectre de fréquences du burst sont déterminées et comparées l'une avec l'autre,

- et en cas d'écart défini entre ces énergies ainsi déterminées, il est conclu à la présence de perturbations par le canal voisin

- et en cas de constatation de perturbations par le canal voisin, des moyens de filtrage (11) pour les valeurs d'échantillonnage reçues du burst analysé sont activés pour effectuer un filtrage passe-bas et le signal radio mobile démodulé est amené à l'égaliseur (12).

**18.** Récepteur radio mobile selon la revendication 17, **caractérisé en ce que**
les moyens d'analyse resp. de filtrage (11) sont configurés pour la mise en oeuvre du procédé selon l'une des revendications 1 à 17.

# FIG 1

# FIG 2

Kanal 3

17

Kanal 2

17

Kanal 1

17

# FIG 3

S(f)

Empfangsfilter

Kanal 1

Kanal 2

Kanal 3

f

18

19